(19) Europäisches Patentamt

European Patent Office

Office européen des brevets

(11) **EP 1 645 800 A2**

(12) **EUROPEAN PATENT APPLICATION**

(43) Date of publication:
**12.04.2006 Bulletin 2006/15**

(51) Int Cl.:
*F21V 17/16* (2006.01)    *F21V 5/04* (2006.01)
*F21V 11/06* (2006.01)

(21) Application number: **05076942.1**

(22) Date of filing: **25.08.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **07.10.2004 US 616200 P**

(71) Applicant: **Barco, naamloze vennootschap.
8500 Kortrijk (BE)**

(72) Inventors:
• **Thielemanns, Robby
9810 Nazareth (BE)**
• **De Keukeleire, Steven
9800 Deinze (BE)**
• **Van Hille, Herbert
85737 Ismaning (DE)**
• **Meersman, Karim
8610 Kortemark (BE)**
• **Noyelle, Katrien
8560 Gullegem (BE)**

(74) Representative: **Donné, Eddy
Bureau M.F.J. Bockstael nv
Arenbergstraat 13
2000 Antwerpen (BE)**

(54) **System for and method of optically enhancing video and light elements**

(57)    A video and/or lighting system comprising a lighting module (100) and at least one optical element (330) situated in front of said lighting module (100) that comprises an array of lighting elements (110), wherein said video and/or lighting system is provided with releasable attaching means (310) for attaching said at least one optical element (330) to said lighting module, for a modular setup of said video and/or lighting system.

FIG. 3 C

**Description**

BACKGROUND OF THE INVENTION

1. Field of the Invention

The present invention relates to a system for and method of optically enhancing video and light elements and, more particularly, to optical elements placed in front of video and light elements to change or enhance their characteristics.

2. Discussion of the Related Art

Cathode-ray-tubes (CRTs) and primitive projection systems have long been used to display video and motion pictures. Conventional incandescent lamps, fluorescent lamps, and neon tubes were the traditional lighting elements used to illuminate many large-scale commercial and public signs.

However, the market is now demanding cheaper and larger displays that have the flexibility to customize display sizes and colors, with image and video capability, and that are easy to install, maintain, and disassemble, especially for use in temporary venues; these are market specifications that are not possible with the older technologies.

Relatively recent advances in the manufacture of light emitting diodes (LEDs) have made them an attractive light source for many purposes that previously employed incandescent, halogen, or strobe light sources. LED light sources have longer life and higher efficiency, and they are more durable than previously employed light sources.

Certain types of LEDs can emit radiation in a Lambertian pattern. The Lambertian distribution of illumination, which does not favor any one direction or orientation over another, is the ideal arrangement for some display uses. One example of use for which Lambertian illumination is desired is a scoreboard at a professional sporting event, where fans within the stadium are at all positions relative to the scoreboard - higher, lower, to the left, right, in front of, etc.

When viewing is predicable, such as billboard signs along a highway, Lambertian light distribution is wasteful, as only persons in front of and slightly below the sign read the information on the sign.

In certain key applications, optical efficiency can be greatly enhanced by the introduction of a light-directing layer in front of the LED or other pixel-based displays, in order to preferentially increase the brightness in a certain direction over other directions, enhance the contrast to accommodate indoor versus outdoor applications, or modify the color to create a desired visual effect.

In many applications, for example in entertainment venues, both video and lighting effects are desired. However, different lighting elements are generally needed for video versus lighting in order to create the desired effects. What is needed is a means to generate both video and lighting effects by using the same lighting system.

Three-dimensional images and video are becoming more widely used. To create the more realistic effects and environments demanded by the virtual reality, simulation, and gaming markets, life-like images need to be created and displayed. Until recently, three-dimensional effects were only created by using stereo viewers, red and blue colored glasses, polarizing glasses, or other types of devices. Now, through the use of LEDs and holographic, diffractive or lens array screens, three-dimensional images and video can be viewed by the naked eye.

There are many types of optical elements that can be used for an endless number of current and new applications. These optical elements are placed in a beam or path of light in order to change the characteristics of the light passing through the optical elements. Such optical elements may be as simple as a conventional cylindrical or spherical lens.

Other types of optical elements may include Fresnel structures, grating structures, filters, total internal reflection (TIR) structures, nonlinear optical elements, such as Gradient-index (GRIN) lenses, prismatic structures, polarizers, pillow optic formations, fiber optic cables, and other types of optical wave guides, as are well known to those skilled in the art.

All of these structures receive a light input from a light source and transmit or reflect the light through the structure or element, then permit the light to exit from the structure or element in a somewhat altered state. All of these types of optical elements either transmit, reflect, diffract, refract, (partially) absorb or filter out certain wavelengths or polarizations of the light as it exits the structure or element. By altering the properties of the light that propagate through the optical element, desired enhancements or effects can be created. What is needed is a flexible video and lighting system that can be easily modified to create a desired visual effect or adapted to a specific environment of use, such as indoors or outdoors.

An example of an optically enhanced display system is found in reference to U.S. Patent Application No. 20020084952, entitled, "Flat panel color display with enhanced brightness and preferential viewing angles."

Said '952 patent application describes a light directing apparatus formed of an LED array that has RGB light emitting diode structures arrayed longitudinally along a substrate to form a plurality of RGB triplet groups and a lenslet array that has a plurality of lenslet structures positioned adjacent to a respective one of the RGB triplet groups.

The lenslet structures include, for each respective RGB triplet group, a plurality of cylindrical lenses that is indexed to its respective RGB triplet group. The cylindrical lenses are longitudinally arrayed in parallel to the respective RGB light emitting diode structures. This arrangement results in greater optical efficiency, because light from the LEDs is preferentially directed in a desired direction where an observer is most likely to be.

The '952 patent uses cylindrical lenses to direct light from light emitting elements. However, in many applications and environments, other optical elements may be better suited to changing the viewing angle. For example, altering the viewing cone of the emission profile produced by the light emitting elements may also be a desired effect in combination to changing the viewing angle.

Additional effects may be desired in combination with altering the viewing angle, for example, light diffusion, adding color, or increasing contrast. What is needed is a modular display system that can easily adapt to specific applications and environments, yet remain flexible enough to produce desired video and lighting effects.

SUMMARY OF THE INVENTION

It is therefore an object of the invention to provide a modular display system that can act as both a video and a lighting system.

It is another object of this invention to provide a flexible lighting system.

It is yet another object of this invention to provide a video and lighting system that can easily be adapted for indoor or outdoor use.

It is yet another object of this invention to provide a modular system that can be used for multiple applications.

It is yet another object of this invention to provide a modular system in front of which a variety of optical elements can be mounted, either independently or in combination, to produce desired video or lighting effects.

Thereto the present invention relates to a video and/or lighting system comprising a lighting module and at least one optical element situated in front of said lighting module that comprises an array of lighting elements, wherein said video and/or lighting system is provided with releasable attaching means for attaching said at least one optical element to said lighting module, for a modular setup of said video and/or lighting system.

In particular the present invention is a video and/or lighting system that uses solid state, emissive elements, such as LEDs, that, when used in conjunction with optical elements, alters the properties of light that propagate through the optical element and creates desired enhancements or effects.

A modular emissive lighting source can be used for several different applications and in a variety of viewing environments by the user's changing the type or position of the optical element that is placed in front of the emissive lighting source.

For example, a single system of modular emissive lighting sources can be used to display full-motion video, create magnified, two-dimensional images, create three-dimensional images, or act as a light source by the user' s changing the optical elements. Different optical elements can also be used to change the viewing angle or emission profile, enhance the brightness, contrast, and color, or enable the system to be used indoors or outdoors.

The present invention also relates to a method for optically enhancing a video and/or lighting system wherein use is made of a lighting module and a set of different corresponding optical elements, wherein one or more of said optical elements can be attached in front of said lighting module in a releasable manner, said method comprising the steps of determining the environmental use; determining the desired video and/or lighting effect; choosing an appropriate optical element.out of said set; attaching said appropriate optical element to the lighting module in a releasable manner.

BRIEF DESCRIPTION OF THE DRAWINGS

In order to better explain the characteristics of the invention the following preferred embodiments and method are described as an example only, without being limitative in any way, with reference to the accompanying drawings, in which:

Figure 1A illustrates a front view of a lighting module in accordance with the invention;
Figure 1B illustrates a back view of a lighting module in accordance with the invention;
Figure 2 illustrates a lens array of the present invention;
Figure 3A illustrates a front view of a clicking system, with components separated, that is used for attaching an optical element array to a lighting module in accordance with the invention;
Figure 3B illustrates a second front view of a clicking system, with components attached, for attaching an optical element array to a lighting module in accordance with the invention;
Figure 3C illustrates a side view of a clicking system for attaching an optical element array to a lighting module in accordance with the invention;
Figure 3D illustrates a detailed view of a clicking system for attaching an optical element array to a lighting module in accordance with the invention;
Figure 4A illustrates a one-to-one lighting system with front optics in accordance with the invention;
Figure 4B illustrates a front view of a one-to-one lighting system with front optics in accordance with the invention;
Figure 5A illustrates a lighting system with contrast-enhancing and viewing angle modifying front optics in accordance with the invention;
Figure 5B illustrates a second embodiment of a lighting system with contrast-enhancing and viewing angle modifying front optics in accordance with the invention;
Figure 6A illustrates a one-to-many lighting system with front optics in accordance with the invention;
Figure 6B illustrates a detailed view of the lens of a one-to-many lighting system with front optics array in accordance with the invention;
Figure 7 illustrates a lighting system with thin film front optics in accordance with the invention;
Figure 8 illustrates a lighting system with front optics;
Figure 9 illustrates examples of Fresnel lenses in accordance with the invention;
Figure 10 illustrates an example gradient-index lens in accordance with the invention;
Figure 11A illustrates a light pipe of the present invention;
Figure 11B illustrates a light pipe array of the present invention;
Figure 12A illustrates a binary surface relief diffractive optical element;
Figure 12B illustrates a multi-layer surface relief diffractive optical element;
Figure 13 is a flow diagram of a method of optically enhancing a video and/or lighting system in accordance with the present invention.

## DESCRIPTION OF A PREFERRED EMBODIMENT

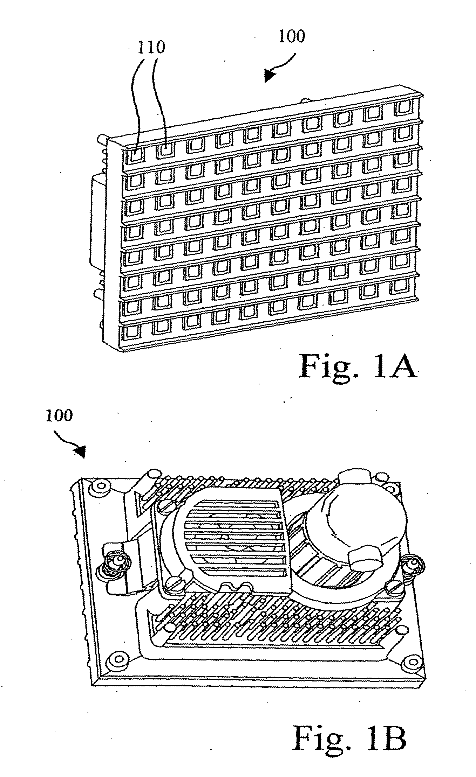

Figure 1A illustrates a front view of an exemplary lighting module 100. Lighting module 100 contains a 8 x 11 array of emissive lighting elements 110. However, lighting module 100 is not limited in size to 8 x 11 and may be an array of any size. Lighting module 100 is designed to be combined with other, similar lighting modules to create a large-scale display.

Figure 1B illustrates a back view of an exemplary lighting module 100.

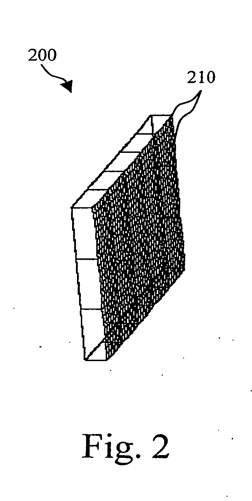

Figure 2 illustrates a lens array 200 that is formed of an array of rectangular or circular lenses 210, each of which has curved front and/or back faces. The faces may be, but are not limited to, planar, spherical, conic aspherical, or polynomial aspherical shapes. The lenses are manufactured with a material (e.g., polycarbonate) that exhibits a particular refractive index, which is used to calculate the focal length of each lens. Lens array 200 is placed in front of or attached to lighting module 100, an array of lighting modules 100, or the entire video and/or lighting display system.

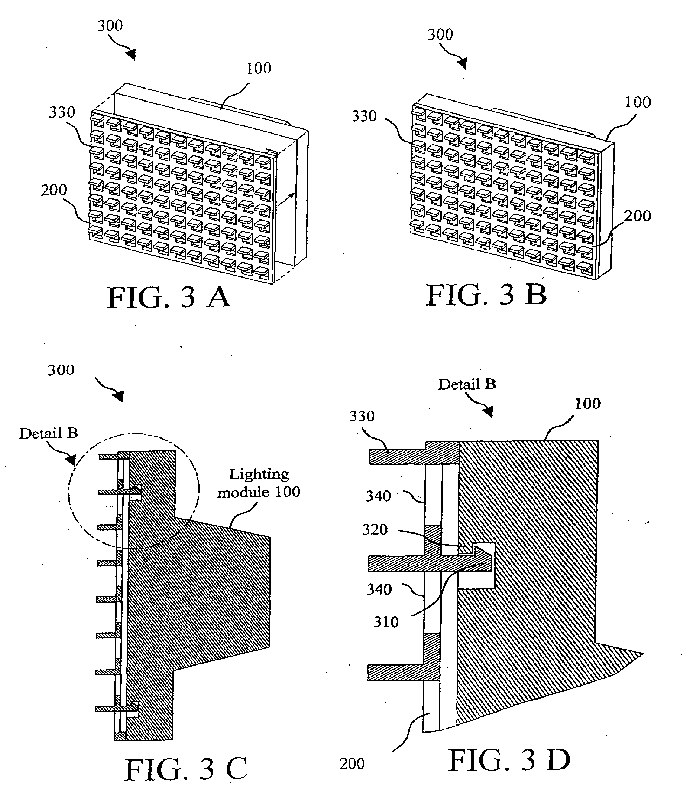

Figure 3A illustrates a video and/or lighting system that, according to the invention, is provided with releasable attaching means.

In figure 3A to 3D said releasable attaching means consist of a clicking system 300, in which the two elements are separated. Clicking System 300 is used for attaching optical element arrays, such as lens array 200 with shade array 330, to lighting module 100. Shade array 330 blocks sunlight, increases image quality, improves contrast, and is particularly useful in outdoor applications where there might be bright sunlight. Clicking system 300 is one embodiment of a means to attach optical element arrays to lighting module 100. Other embodiments may include the use of a releasable adhesive, such a releasable glue, to attach an optical element array to lighting element 100. Yet a further embodiment may include a clicking mechanism, whereby a latch attaches around lighting module 100. Yet another embodiment may be an optical element array attached to lighting module 100 by the use of bolts.

It is clear that the optical element or an array thereof can be placed in a carrying structure that is provided with releasable attaching means such as said clicking system 300, or that can be attached to said lighting module 100 in a releasable manner by means of bolts or the like for the modular setup of said video and/or lighting system.

Preferably said video and/or lighting system is also provided with means for altering the distance between the lighting elements 110 and said optical element, as this distance is an important parameter for obtaining a desired visual effect.

Figure 3B illustrates a second front view of clicking system 300, in which the two elements are connected via clicking system 300.

Figure 3C illustrates a side view of clicking system 300.

Figure 3D illustrates Detail B of clicking system 300. Clicking system 300 includes lens array 200, which is made up of an array of lenses 340, and, in one embodiment, shade array 330, which includes a latch 310. Latch 310 clicks into and attaches to a complementary latch lip 320, which hold lens array 200 onto lighting module 100.

The distance between lenses 340 and emissive lighting element 110 can be set to a specific distance by use of latch 310 of an appropriate length. Clicking system 300 may also be used to accurately position lenses 340 directly in front of or offset from emissive lighting element 110.

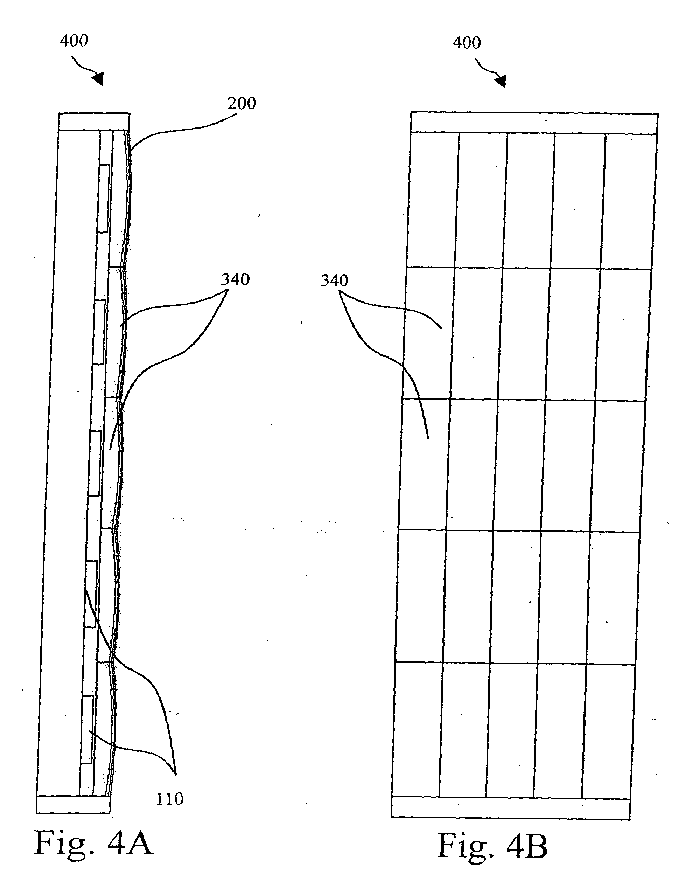

Figure 4A illustrates a one-to-one lighting system with front optics 400. There is a single lens 340 for each emissive lighting element 110. The area between emissive lighting elements 110 and lenses 340 can be filled with air or, more preferably, a material, such as an optical adhesive, which has a refractive index that has been chosen to better optically couple the light from emissive lighting elements 110 into lenses 340. This refractive index match will decrease the light loss. Examples of optical adhesives include OP-40 High Performance Optical Adhesive, by DYMAX Corporation, and Dow Corning's SYLGARD® 184 Silicone Elastomer. In addition, non-adhesive optical gels, such as Dow Corning's SYLGARD® 527 Silicone dielectric gel, can also be used. Although one-to-one lighting system with front optics 400 is shown with a 5x5 array of emissive lighting elements 110, it is representative of any lighting module 100 of any sized array of emissive lighting elements 110. Lens array 200 can be of the same, or similar, size as lighting module 100 and attached to lighting module 100 in a number of ways, such as by clicking system 300, as is shown in Figure 3A. Alternatively, lens array 200 may be integrated into a large sheet. This large sheet can have the size of several lighting modules 100 or of the entire display system.

Figure 4B illustrates a front view of a one-to-one lighting system with front optics 400.

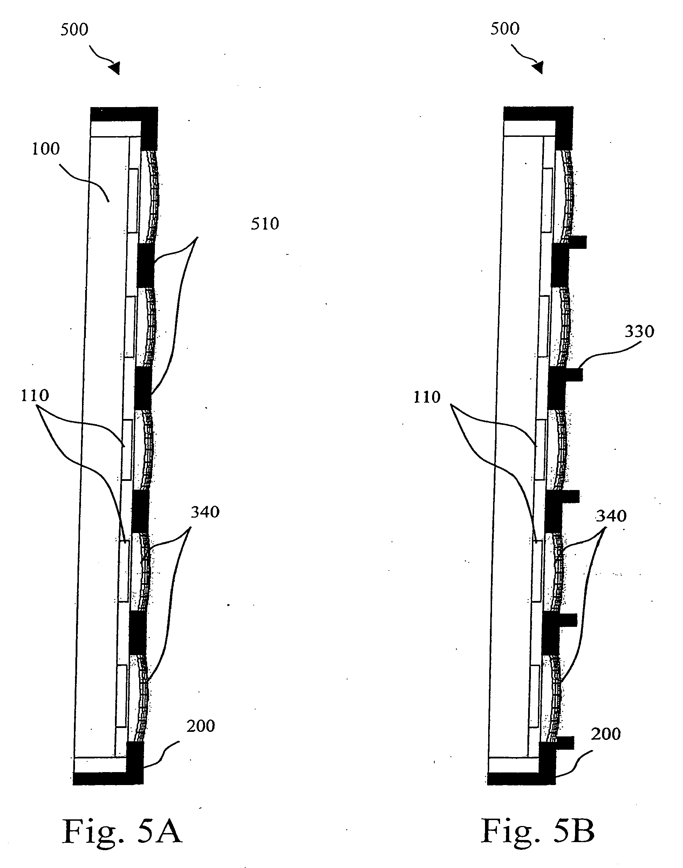

Figure 5A illustrates a lighting system with contrast-enhancing front optics 500. Lighting system with contrast-enhancing front optics 500 includes emissive lighting elements 110 and lens array 200, made up of an array of lenses 340. In one embodiment, on top of lens array 200, black matrices 510 are placed. The black area between emissive lighting elements 110 will increase viewing contrast for the viewer.

Figure 5B illustrates a second embodiment of a lighting system with contrast-enhancing front optics 500 in which shade array 330 is placed on top of lens array 200.

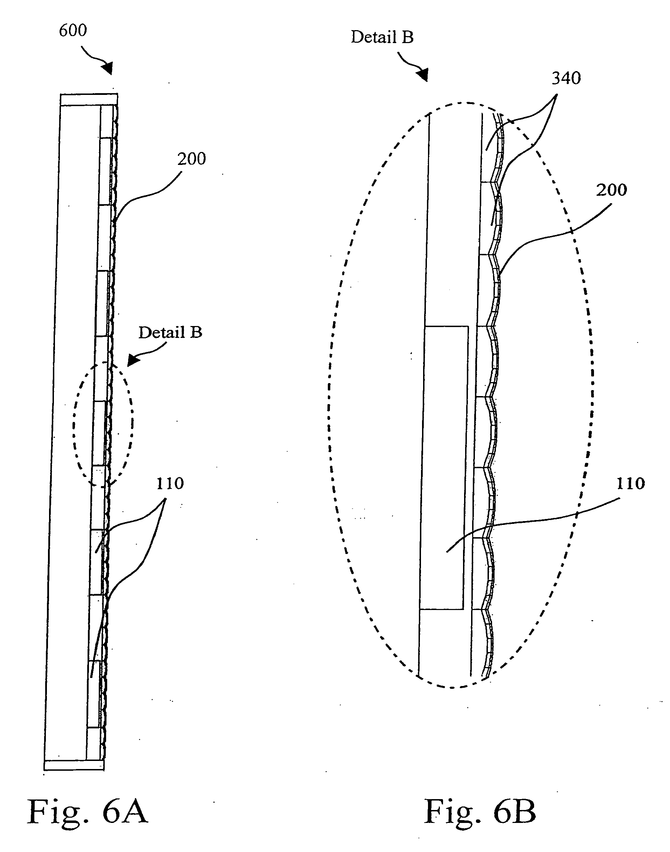

Figure 6A illustrates a one-to-many lighting system with front optics 600. Lens array 200 is placed on top of an array of emissive lighting elements 110, in one embodiment, by clicking system 300. There is a plurality of lenses 340 for each emissive lighting element 110. Therefore, the pitch of lens array 200 is much less than the pitch of the array of emissive lighting elements 110. In many instances, it may be more convenient to use a larger lens array 200 that covers several lighting modules 100.

Figure 6B illustrates Detail B of lens array 200 of one-to-many lighting system with front optics 600.

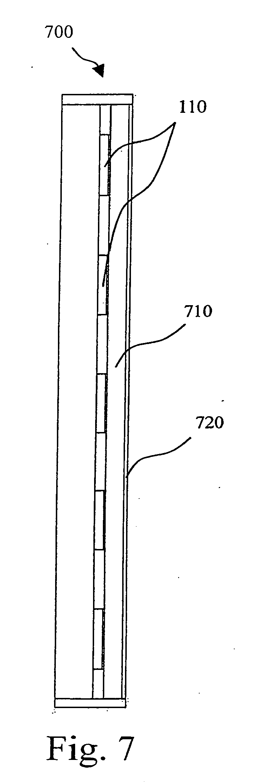

Figure 7 illustrates a lighting system with thin film front optics 700. In one embodiment, a supporting transparent structure 710 is placed between emissive lighting elements 110 and a thin film 720. Supporting transparent structure 710 provides the necessary space between emissive lighting element 110 and thin film 720 so that the optical properties of thin film 720 create the desired effect. Thin film 720 can be, for example, LSD® Light Shaping Diffuser Sheets, by' Physical Optics Corporation.

In another embodiment, supporting transparent structure 710 is placed on top of thin film 720. This protects thin film 720 from damage or from the elements in an outdoor application. Depending on the type of thin film 720 used, thin film 720 can be, for example, glued upon supporting transparent structure 710, which is than placed in front of emissive lighting elements 110.

Thin film 720 can also be used in combination with lens array 200 to produce a combination of desired optical effects. This is possible with both one-to-one lighting system with front optics 400 and one-to-many lighting system with front optics 600.

In one embodiment, thin film 720 is a surface relief diffusion film, which is a thin (e.g., less than 1 mm thick) film whose surface structure is generated in such a way that it will change the emission profile of emissive lighting elements 110 to create circles, squares, snowflakes, ellipses, and other effects. Unlike diffractive optics, thin film 720 has no wavelength dependency. Thin film 720 is designed according to the specifications of emissive lighting elements 110 and the desired optical effect. Additionally, thin film 720 can be a large sheet the size of several lighting modules 100 or the size of the entire display and can be either homogenous or exhibit different optical properties across the film.

In another embodiment, thin film 720 of uniform color is used and placed in front of lighting module 100 in order to change the color of emissive lighting elements 110.

In yet another embodiment, thin film 720 of a certain density is used and placed in front of lighting modules 100 in order to change the contrast. Thin film 720 of this type may also be used in outdoor applications in order to decrease the brightness and enhance the contrast, which improves viewing in bright sunlit environments.

In yet another embodiment, thin film 720 is a thin plastic or glass sheet with a specific coating, such as a dichroic coating, which is a thin film coating that can act as a short wave pass, long wave pass, bandpass, or notch filter by reflecting unwanted wavelengths back towards the light source. Another example of a specific coating is a long-pass coating, which is a thin film coating that passes all wavelengths longer than the cut off wavelength and blocks all shorter wavelengths. Yet another example of a specific coating is a short-pass coating, which is a thin film coating that passes all wavelengths shorter than the cut off wavelength and blocks all longer wavelengths. For example, to increase the thermal stability of lighting module 100, an infrared (IR) filter could be placed in front of emissive lighting element 110. This IR filter reflects the IR radiation present in the ambient illumination and thus prevents the IR radiation from reaching lighting module 100. The use of the IR filter, a short-pass filter, will increase the thermal stability of the device, since the IR radiation will not be able to heat lighting module 100. The image quality is not influenced by the use of such an IR filter. Other dichroic coatings, however, can improve visibility and contrast.

In yet another embodiment, an active element, for example a photo-chemical element, can be placed in front of lighting module 100. The properties of a photo-chemical element are such that the density changes as a function of the amount of incident sunlight. This can be useful to optimize the contrast for each illumination level when the display is used in an outdoor environment under a variety of sunlight conditions.

In yet another embodiment, an active element, for example a liquid-crystal display (LCD) element, can be placed in front of lighting module 100. Lighting element 100 can function as a back light for the LCD panel. By appropriately driving the LCD elements, a desired optical effect can be created, for example polarizing the light from emissive lighting element 110.

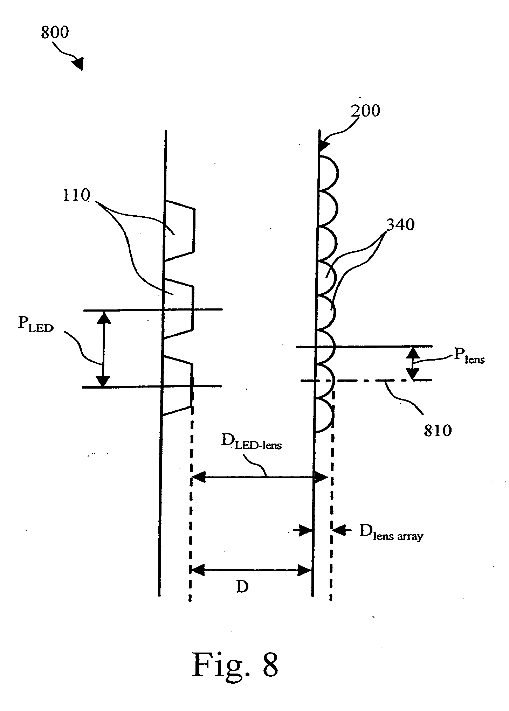

Figure 8 illustrates a lighting system with front optics 800 that is formed of an array of emissive lighting elements 110 and a lens array 200, which is made up of an array of individual lenses 340. The optical axis 810 of lens 340 is shown, which is the straight line that is coincident with the axis of symmetry of the surface of lens 340. D is the distance between the array of emissive lighting elements 110 and lens array 200. The pitch of an optical element is the distance between the centers of two adjacent elements. For example, the pitch, $P_{LED}$, of the array of emissive lighting elements 110 is the distance between the centers of two adjacent emissive lighting elements 110. The pitch, $P_{lens}$, of lens array 200 is the distance between the centers of two adjacent lenses 340.

In order to create a virtual image, the pitch of lens array 200 must be much less than the pitch of the array of emissive lighting elements 110, or $P_{lens} \ll P_{LED}$. In this embodiment, there are several lenses 340 per emissive lighting element 110, as is further illustrated in Figure 5A. The pitch, $P_{LED}$, of the array of emissive lighting elements 110 is fixed. $P_{lens}$ is designed to avoid or minimize Moiré effects, which those skilled in the art are familiar with. $P_{lens}$ is chosen to be as small as possible, in order to minimize Moiré effects. However, it is easier and less expensive to fabricate lens array 200 so that it has a large pitch.

If lens array 200 and the array of emissive lighting elements 110 are considered to be a series of apertures, then they can be considered to be a series of square waves. The Fourier expansion for a square wave of period P = 2L, frequency $f = 1/2L$, $\omega = 2\pi/2L$, and the duty factor d = 2c/2L is given as:

$$f(x) = \frac{c}{L} + \frac{2}{\pi}\sum_{m=1}^{\infty}\frac{(-1)^m}{m}\sin\left\{m\pi\frac{c}{L}\right\}\cos\left\{m\pi\frac{x}{L}\right\} = d + \frac{2}{\pi}\sum_{m=1}^{\infty}\frac{(-1)^m}{m}\sin\{m\pi d\}\cos\{m\omega x\}$$

where:

2c: signal width
2L: period of the square wave = sum of the length of the work interval (= 2c) and the pause interval

Retaining only the difference terms in a product of two series (i.e., the Fourier expansion of the array of emissive lighting elements 110 and the Fourier expansion of lens array 200) results in:

$$\left[\frac{2}{\pi^2}\sum_{m=1}^{\infty}\sum_{q=1}^{\infty}\frac{(-1)^{m+q}}{mq}\sin\{q\pi d_0\}\sin\{m\pi d\}\cos\varphi\cos\frac{x\pi}{PP}\{q - m(LLP)\}\right] +$$

$$+ \left[\frac{2}{\pi^2}\sum_{m=1}^{\infty}\sum_{q=1}^{\infty}\frac{(-1)^{m+q}}{mq}\sin\{q\pi d_0\}\sin\{m\pi d\}\sin\varphi\sin\frac{x\pi}{PP}\{q - m(LLP)\}\right]$$

where:

LLP: number of lenses 340 per pixel interval, $P_{LED}$ = PP (mm per pixel interval = pixel pitch) * LLM (number of lenses 340 per unit length)

Integer differences will lead to low beat frequency, whereas half-integer factors will lead to the highest beat frequency. Therefore, the relationship between the pitch of the array of emissive lighting elements 110 and lens array 200 is chosen to be:

$$P_{LED} = (m+0.5) * P_{lens}$$

where m is an integer, and $m \geq 1$

There is not a unique solution, as m can take on several values while balancing between minimizing the size of lenses 340, in order to reduce Moiré effects, and maximizing the size of lenses 340, in order to improve the ease of fabrication.

A two-dimensional image will result when the focal lengths of lenses 340 in lens array 200 are the same in both the X axis and the Y axis directions, whereas a three-dimensional image will result when the focal lengths are different in the X axis and the Y axis directions.

The desired magnification of a virtual image is known and can be described by (when the two-dimensional problem is reduced to a one-dimensional problem, and it is assumed that lens array 200 is immersed in air):

$$M = \frac{D - f \cos\Theta}{f \cos\Theta} = \frac{D}{f \cos\Theta} - 1$$

where:

D: distance between the array of emissive lighting elements 110 and lens array 200
*f*: focal length of lenses 340
$\Theta$: angle of observation off the normal

The distance, D, between the array of emissive lighting elements 110 and lens array 200 can also be determined by the thickness of lens array 200, $D_{lens\ array}$, and the distance $D_{LED-lens}$ one wants between lens array 200 and the array of emissive lighting elements 110 by the following relationship:

$$D = D_{LED-lens} - D_{lens\_array}$$

where:

D: distance between the array of emissive lighting elements 110 and the surface of lens array 200 nearest the array of emissive lighting elements 110, measured along optical axis 810 of lenses 340 in lens array 200
$D_{lens}$ array: thickness of lens array 200, i.e. distance between the surface of lens 340 nearest the array of emissive lighting elements 110 and the surface of lens 340 furthest from the array of emissive lighting elements 110, measured along optical axis 810 of lens 340
$D_{LED-lens}$: distance between the array of emissive lighting elements 110 and the surface of lens 340 furthest from the array of emissive lighting elements 110, measured along optical axis 810 of lenses 340 in lens array 200

Knowing the focal length of lenses 340, the required radius of curvature of lenses 340 can be determined from the following relationship, assuming the thickness of lenses 340 is disregarded:

$$\frac{n_1}{f_1} = \frac{n_2}{f_2} = \frac{(n_{lens} - n_1)}{R_1} - \frac{(n_{lens} - n_2)}{R_2}$$

where:

$n_{lens}$: index of refraction of lenses 340
$n_1$: refractive index of the object medium, i.e. the medium between emissive lighting elements 110 and lenses 340. The object medium can be air, but it can also be some kind of optical adhesive.

$n_2$: refractive index of the image medium. The image medium will usually be air.

$R_1$: radius of curvature of the front of lenses 340

$R_2$: radius of curvature of the back of lenses 340

$f_1$: object effective focal length of the lenses 340

$f_2$: image effective focal length of the lenses 340

Although the above mathematical equations describe a two-dimensional space, similar relationships exist describing the three-dimensional space.

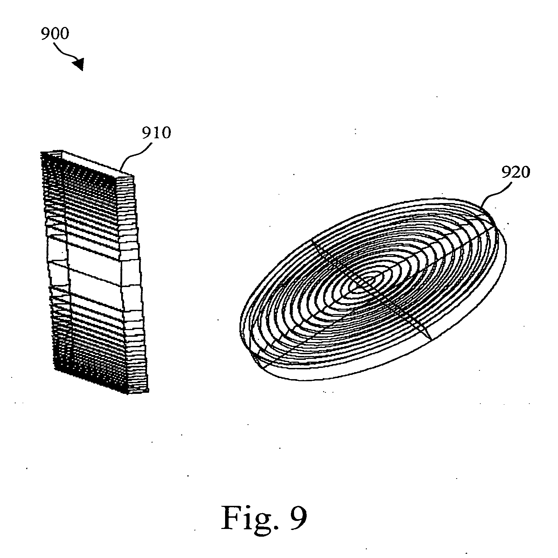

Figure 9 illustrates examples of Fresnel lenses 900. The substrate shape is a flat rectangular lens 910 (if cylindrical) or a flat disk lens 920 (if radial). One face of the substrate is formed of radial or rectangular facets, which define the profile of Fresnel lens 900, which yields optical power. The profile is constructed of radially flat facets (or a series of flat faces if sub-segments are used) (not shown). Fresnel lenses 900 can be used instead of spherical lenses and possess the advantage of being thinner and lighter. However, the complex surface structure can lead to imperfections in the virtual image. A Fresnel lens array consists of an array of such Fresnel lenses 900.

One-to-one lighting system with front optics 400 can be designed such that each lens 340 of lens array 200 or each Fresnel lens 900 of an array of Fresnel lenses 900 is matched one-to-one with emissive lighting elements 110. Therefore, the pitch of lens array 200 is equal to the pitch of the array of emissive lighting elements 110, or $P_{LED} = P_{lens}$. By the user's choosing the focal length of lenses 340 and positioning lens array 200 appropriately, the viewing angle of emissive lighting elements 110 can be altered to a desired angle. The viewing cone is determined by the object and image distances. The relationship between the object distance, the image distance and the focal length is given by:

$$\frac{1}{s_2} = \frac{1}{f} + \frac{1}{s_1}$$

where:

$s_2$: image distance

$s_1$: object distance

$f$: focal length of lens 340 (it is assumed that lens array 200 is immersed in air, i.e. $f_1 = f_2 = f$)

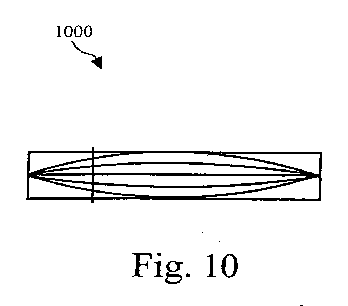

Figure 10 illustrates an example of a gradient-index lens (GRIN) 1000. GRIN lens 1000 utilizes a refractive index gradient. The index of refraction is highest in the center of the lens and decreases as distance from the axis increases. GRIN lens 1000 focuses light through a precisely controlled radial variation of the lens material's index of refraction, from the optical axis to the edge of the lens. GRIN lens 1000 offers an alternative to the often-painstaking craft of polishing curvatures onto glass lenses. Because the index of refraction is gradually varied within the lens material, light rays can be smoothly and continually redirected towards a point of focus. The internal structure of this index gradient can dramatically reduce the need for tightly controlled surface curvatures and results in simple, compact lens geometry. A GRIN lens array is formed of an array of GRIN lenses 1000.

In many applications, the ability to change the optimum viewing angle of emissive lighting elements 110 or alter the viewing cone of emissive lighting elements 110 is an important feature. In order to achieve these features, one-to-one lighting system with front optics 400, is designed such that one lens 340 per emissive lighting element 110 is used. Therefore, the pitch of lens array 200 is equal to the pitch of the array of emissive lighting elements 110, or $P_{LED} = P_{lens}$. The distance, D, between lens array 200 and the array of emissive lighting elements 110 is made as small as possible. This ensures that light rays from emissive lighting elements 110 pass only through the lens 340 for which they have been designed, rather than through another lens in lens array 200 that may be adjacent. The focal length of lens 340 is chosen in such a way as to create the desired viewing cone.

If emissive lighting element 110 is an organic LED (OLED), an array of GRIN lenses 1000 may be preferred. Because of the changing refractive index, the desired optical effects can be created inside GRIN lens 1000. GRIN lens 1000 does not require an air gap between it and emissive lighting elements 110, nor between GRIN lens 1000 and the viewer side of the display, which is generally required with other types of lenses, such as Fresnel lens 800. The air gap provides the necessary refractive index change that other types of lenses require to produce the desired optical effect.

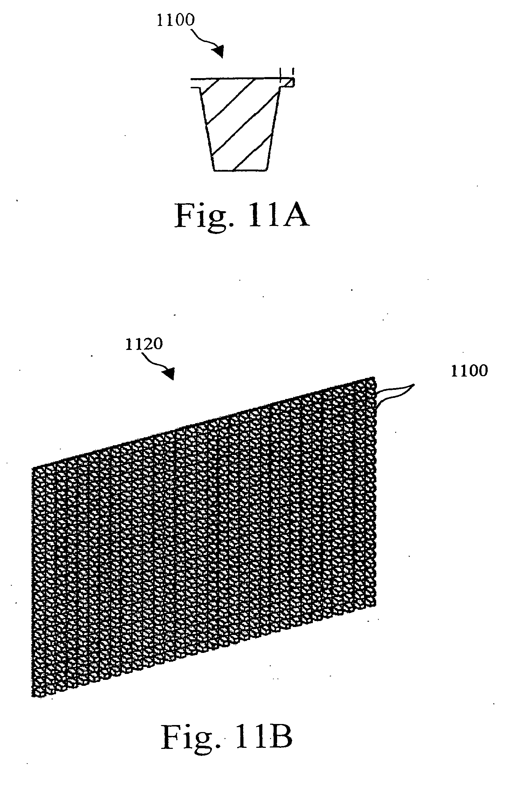

Figure 11A illustrates a single light pipe 1100.

Figure 11B illustrates a light pipe array 1120, which is made up of an array of light pipes 1100. Light pipe array 1120 can be used to change the fill factor or the viewing angle of lighting module 100. In combination with a black matrix 410, light pipe array 1120 can also be used to increase the contrast of a display.

In one embodiment, one-to-one lighting system with front optics 400 is designed such that there is one light pipe 1100 for each emissive lighting element 110. Therefore, the pitch of light pipe array 1120 is equal to the pitch of the array of emissive lighting elements 110. By the user's choosing an appropriate entrance and exit aperture and length of light pipe 1100, the viewing angle of emissive lighting element 110 can be altered to a desired angle.

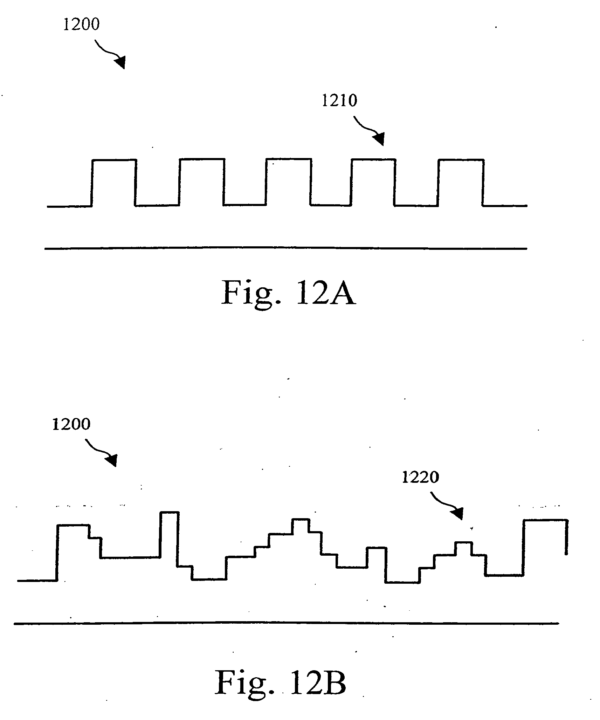

Figure 12A illustrates an example of a surface relief diffractive optical element 1200. One example of the surface of such an optical element is a binary surface relief diffractive optical element 1210.

Figure 12B illustrates a second example of surface relief diffractive optical element 1200. Another example of the surface of such an optical element is a multi-layer surface relief diffractive optical element 1220.

Diffractive optical elements (DOE) are generalized diffraction gratings. In contrast to conventional optical systems, which rely on reflection and refraction, diffractive optical elements work by diffracting light. The unique property of a diffractive optical element is that the properties of complex optical systems can be encoded in a single element. Diffractive optical elements can perform more than one optical function. For example, they can perform the combination of one or more of filtering, beam division, focusing, etc. Broadly speaking the diffraction process is not affected by the shape of the device. Although thickness is a design parameter, it is measured in microns and has minimal effect on form factor. As a result, diffractive elements are extremely thin and avoid the aperture/weight tradeoffs that exist in classical optical systems. Their intrinsic thinness and fundamental diffractive properties also allow for unique and extreme form factors not achievable with conventional optics. Diffractive optics can be based on surface relief structures or alternately thin phase gratings recorded in the bulk medium using holography. The surface relief diffractive optical element is created by encoding a relief pattern directly on the surface of the optical component. This pattern is constructed using miniature features. These features may be constructed using techniques such as diamond turning or photolithography. The phase of incoming light is manipulated according to the thickness of the features and the index of refraction of the material. The DOEs are characterized by high efficiency, design flexibility, light weight and small size. Furthermore, they can be replicated at low cost for mass production.

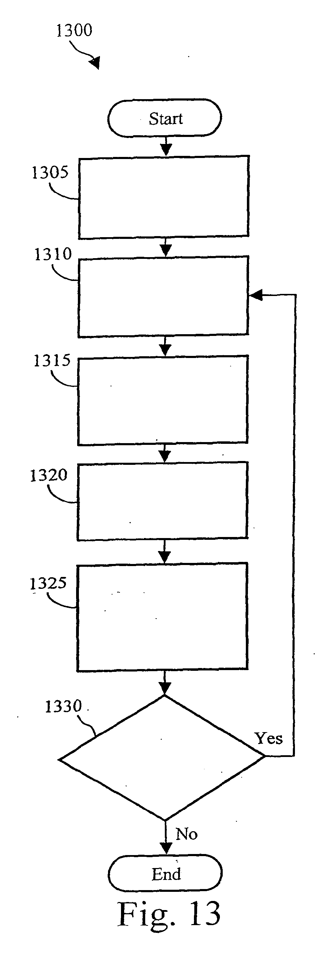

Figure 13 illustrates an example method 1300 of optically enhancing a video and/or lighting system by using optical elements that are placed in front of the lighting source. The method allows a combination of effects to be created by the combination of optical elements. The video and/or lighting system can be tailored to different operating environments, for example, indoors or outdoors. Method 1300 includes the steps of:

Step 1305: Determining environment of use
In this step, the environment in which the video and/or lighting system is used is determined. How the system is viewed is also determined. For example, a specific video or lighting system may be used indoors or outdoors, may be viewed from below or from several angles, or may be used in bright sunlight or at night. Method 1300 proceeds to step 1310.

Step 1310: Determining desired video and/or lighting effect
In this step, use of a specific video or lighting effect is determined. The desired effect is a function of the application of the video or lighting display, for example, message notification or entertainment. The desired effect is also a function of the environment in which lighting module 100 will be used, for example, indoors or outdoors. Video and/or lighting effects may include, but are not limited to, two-dimensional magnification, three-dimensional image, enhanced contrast, adjusted brightness, diffusion, color change, altered viewing angle, altered viewing cone, and modified emission profile. Method 1300 proceeds to step 1315.

Step 1315: Choosing appropriate optical element to create effect
In this step, an optical element is chosen that will best produce the desired video or lighting effect. Factored into the decision is the use of the application, environment, and size, as well as cost and design considerations. Optical element arrays may include, but are not limited to, spherical or rectangular lenses, Fresnel lenses 900, GRIN lenses 1000, light pipes 1100, thin films 720, and diffractive optical elements 1200. Method 1300 proceeds to step 1320.

Step 1320: Determining characteristics of optical element array
In this step, characteristics of the optical element array are determined that will best produce the desired video and/or lighting effect appropriate to the application, environment, and intended use of the lighting system. Parameters include, but are not limited to, index of refraction for lenses 340, focal length for lenses 340, pitch of lens array 200, distance between lens array 200 and the array of emissive lighting elements 110, color of thin film 720, contrast-enhancing elements, such as black matrices 510 or shade array 330, emission profile of emissive lighting elements 110, preferred viewing angle, size, and cost. For example, if compact size is an important characteristic of a video and/or lighting system, an optical element array that is thin and small may be used. Alternatively, if cost is a more important consideration than size, larger, cheaper optical element arrays may be used to create the desired effects. Method 1300 proceeds to step 1325.

Step 1325: Determining mechanism for attaching optical element array to lighting module

In this step, how the optical element array is attached to, or placed in front of, lighting module 100 is determined. For example, the video and/or lighting system and the optical element array may be the same size as the display and attached by clicking system 300, a fixing mechanism with bolts, or even by placing the optical element array in front of the video and/or lighting system at a fixed distance, without its making contact with the video and/or lighting system. In another embodiment, if the video and/or lighting system is to be used in various applications, an optical element array of the same size as each lighting module 100 may be used and attached to each lighting module 100 by clicking system 300 or by affixing the optical element array to lighting module 100 by means of an optical adhesive. An optical adhesive has the advantage of improving optical performance by limiting light loss, but its use does make it more difficult to easily construct and teardown temporary video and/or lighting display systems. Method 1300 proceeds to step 1330.

Step 1330: Another video and/or lighting effect?

In this decision step, the user determines whether a combination of multiple video or lighting effects is desired. For some applications and environments, a combination of effects is useful, for example, for adding color while increasing contrast or for diffusing light while changing the viewing cone. A combination of effects can be created by use of a combination of optical elements; for example, thin film 720 can be placed in front of lenses 340. If an additional video and/or lighting effect is desired, method 1300 returns to step 1310. If no additional video and/or lighting effects are desired, method 1300 ends.

The invention is by no means limited to the above described embodiments and method given as an example and represented in the accompanying drawings; on the contrary, such a system and method for optically enhancing a video and/or light elements.

**Claims**

1. A video and/or lighting system comprising a lighting module and at least one optical element situated in front of said lighting module that comprises an array of lighting elements, wherein said video and/or lighting system is provided with releasable attaching means for attaching said at least one optical element to said lighting module, for a modular setup of said video and/or lighting system.

2. The video and/or lighting system according to claim 1, wherein said releasable attaching means consist of a clicking system.

3. The video and/or lighting system according to claim 2, wherein said clicking system consists of one or more latches projecting from the back of said optical element and of complementary latch lips provided in the front of said lighting module.

4. The video and/or lighting system according to claim 1, wherein said optical element consists of an array of lenses that are separated of each other with light blocking elements, and wherein said latches project from said contrast enhancing elements.

5. The video and/or lighting system according to claim 1, wherein said optical element is provided in a carrying structure comprising said releasable attaching means.

6. The video and/or lighting system according to claim 1, wherein said releasable attaching means comprise bolts.

7. The video and/or lighting system according to claim 1, wherein said releasable attaching means consist of an releasable adhesive.

8. The video and/or lighting system according to claim 1, wherein a plurality of different corresponding optical elements are available for said lighting module.

9. The video and/or lighting system according to claim 1, wherein said optical element is chosen from a group comprising: a conventional cylindrical or spherical lens; Fresnel structures; grating structures; filters; total internal reflection (TIR) structures; nonlinear optical elements, such as Gradient-index (GRIN) lenses; prismatic structures; polarizers; pillow optic formations; fiber optic cables; light pipes; and other types of optical wave guides.

**10.** The video and/or lighting system according to claim 1, wherein said optical element is an array of optical elements.

**11.** A method for optically enhancing a video and/or lighting system wherein use is made of a lighting module and a set of different corresponding optical elements, wherein one or more of said optical elements can be attached in front of said lighting module in a releasable manner, said method comprising the steps of determining the environmental use; determining the desired video and/or lighting effect; choosing an appropriate optical element out of said set; attaching said appropriate optical element to the lighting module in a releasable manner.

**12.** The method according to claim 10, wherein, after attaching said appropriate optical element to said lighting module, another additional desired video and/or lighting effect is determined, in function of which another appropriate optical element is chosen out of said set, which appropriate optical element is subsequently attached in front of said lighting module.

110      100

Fig. 1A

100

Fig. 1B

200

210

Fig. 2

FIG. 3 A

FIG. 3 B

FIG. 3 C

FIG. 3 D

Fig. 4A

Fig. 4B

Fig. 5A          Fig. 5B

Fig. 6A

Fig. 6B

700

110

710

720

Fig. 7

800

200

110

$P_{LED}$

340

$P_{lens}$

810

$D_{LED\text{-}lens}$

$D_{lens\,array}$

D

Fig. 8

900

910

920

Fig. 9

1000

Fig. 10

1100

Fig. 11A

1120

1100

Fig. 11B

1200

1210

Fig. 12A

1200

1220

Fig. 12B

1300

Start

1305

1310

1315

1320

1325

1330

Yes

No

End

Fig. 13